# EUROPEAN PATENT SPECIFICATION

(11) **EP 3 078 488 B1**
(45) Date of publication and mention of the grant of the patent: **20.01.2021**
(21) Application number: 16000778.7
(22) Date of filing: 05.04.2016
(51) Int. Cl.: B32B 17/10, C03C 27/12

(54) **LAMINATED PLATE**
LAMINIERTE PLATTE
PLAQUE STRATIFIÉE

(30) Priority: 08.04.2015 JP 2015079414; 02.03.2016 JP 2016040210
(43) Date of publication of application: 12.10.2016
(73) Proprietor: AGC Inc., Tokyo 100-8405 (JP)
(72) Inventor: NOTSU, Keiji, Tokyo, 100-8405 (JP); ORIMO, Yoshinori, Tokyo, 108-0023 (JP); NAGANO, Takuya, Tokyo, 100-8405 (JP); KONDO, Tsubasa, Tokyo, 100-8405 (JP); TANIGUCHI, Masahiko, Tokyo, 100-8405 (JP); KATOU, Satoshi, Tokyo, 100-8405 (JP)
(74) Representative: Müller-Boré & Partner Patentanwälte PartG mbB

(56) References cited:
- EP-A1- 2 062 862
- GB-A- 1 359 170
- JP-A- 2007 197 288
- US-A- 5 380 575
- US-A1- 2002 106 519
- US-A1- 2014 141 206

## Description

### BACKGROUND OF THE INVENTION

### 1. Field of the Invention

The present invention relates to a laminated plate.

### 2. Description of the Related Art

As a laminated plate formed by laminating two plates, for example, laminated glass for a vehicle has been known that is formed by laminating two glass plates having respective different radii of curvatures (curved shapes), so that surfaces of these glass plates are firmly adhered to each other (cf. Patent Document 1).

Such laminated glass is in a state where one of the two glass plates is elastically deformed, or the two glass plates are mutually elastically deformed.

Patent Document 1 discloses glass plates that are prevented from being peeled off each other. The glass plates are formed by laminating a pair of glass plates such that, if their edges are laminated, a middle portion is opened, so that the glass plates do not firmly adhere to each other; while if the glass plates are bent, their respective surfaces are firmly adhered to each other, so that a force that presses the glass plates against each other is applied to peripheral portions of the glass plates, and thereby the glass plates are prevented from being peeled off each other.

Patent Document 2 discloses a laminated glass panel for an automobile, having a curved shape resulting from the assembly of a first glass sheet, which is curved before said assembly, with an intermediate thermoplastic sheet and a second glass sheet, the thickness of which does not exceed one third of that of the first sheet. The second glass sheet is not curved or has a curvature that is substantially smaller than that of the first sheet before the assembly thereof with the latter and the intermediate thermoplastic sheet.

Patent Document 3 discloses a laminated glass composed of two glass plates facing each other and an interlayer film. The first glass plate is a curved tempered glass plate, wherein the edge part of the first glass plate is polished (chamfered) in an approximately semicircular shape. A second glass plate may be an untempered glass plate, a semi-tempered glass plate or a chemically tempered glass plate, being curved along the curved shape of the first glass plate.

Patent Document 4 discloses a glass panel comprising a first sheet of glass secured by an intervening organic sheet to a second sheet of glass, both glass sheets having been chemically tempered. The panel may be flat or curved in one or more planes. The two glass sheets may form the external faces of the panel or the faces may be covered by a sheet which is not a strength member or by a coating layer.

### [Patent Documents]

[Patent Document 1] Japanese Unexamined Patent Publication No. H11-060293;
[Patent Document 2] US 2014/141206 A1;
[Patent Document 3] JP 2007-197288 A1;
[Patent Document 4] GB 1 359 170.

### SUMMARY OF THE INVENTION

According to the knowledge of the inventors of the present application, compared with a laminated plate formed by laminating two plates having approximately the same radius of curvature, in the laminated plate according to Patent Document 1, strength may not be sufficient especially at corner portions of the edges of the laminated plate (which are referred to as the corner edges, hereinafter), so that, upon application of a load to the corner edges, the laminated plate tends to be broken.

The problem occurs in the laminated plate. The laminated plate includes a first plate, a second plate, and an intermediate film bonding the first plate and the second plate.

In view of the background described above, the present invention provides a laminated glass plate in as set forth in the claims which a corner edge is hardly damaged.

According to an embodiment of the present invention, there is provided a laminated glass plate including a first plate being curved in a first curved shape; a second plate having a second shape, the second shape being different from the first curved shape; and an inter mediate film bonding the first plate and the second plate, wherein a first corner edge of the laminated plate does not include a fold. Further, a plate thickness of the first plate is greater than or equal to 1.5 mm and less than or equal to 4.0 mm, a plate thickness of the second plate is greater than or equal to 0.2 mm and less than or equal to 1.0 mm; and a standard deviation of a thickness of the laminated glass plate at the first corner edge is less than 0.038 mm, wherein the thickness is measured along the corner edge at each 5 mm interval at a position that is separated from the peripheral edge of the plate by 5 mm toward inside the surface, thereby obtaining 11 measured points.

According to an embodiment of the present invention, a laminated plate can be provided in which a corner edge is hardly broken.

### BRIEF DESCRIPTION OF THE DRAWING

Other objects, features and advantages of the present invention will become more apparent from the following detailed description when read in conjunction with the accompanying drawings.
FIG. 1 is a configuration diagram illustrating a state in which a slidable laminated glass plate for a vehicle is assembled in a vehicle;
FIG. 2 is a diagram of a first glass plate and a second glass plate prior to lamination;
FIG. 3A is a perspective view of a laminated glass plate for a vehicle according to an embodiment;
FIG. 3B is a plane view of the laminated glass plate for a vehicle according to the embodiment;
FIG. 4 is a diagram illustrating a definition of a corner edge;
FIG. 5 is a diagram illustrating the definition of the corner edge for a case where a corner is chamfered;
FIG. 6 is a schematic diagram of the corner edge according to the embodiment, which is observed in a YZ plane;
FIG. 7 is a schematic diagram of the corner edge according to the embodiment, which is observed in a XZ plane;
FIG. 8 is a schematic diagram of a device for producing the laminated glass plate for a vehicle according to the embodiment;
FIG. 9 is a diagram illustrating an example where welded portions are formed along a peripheral edge of a glass plate;
FIG. 10 is a diagram illustrating an example where the welded portions are formed in the glass plate, so that a T-shape is formed as a whole;
FIG. 11 is a diagram illustrating an example where the welded portions are formed, so that an L-shape is formed along two edges of the circumference of the glass plate;
FIG. 12 is a diagram illustrating an example where the welded portions are formed in a cross shape in the glass plate; and
FIG. 13 is a diagram illustrating an example where the welded portions are formed only in a middle portion of the glass plate.

### DETAILED DESCRIPTION OF THE PREFERRED EMBODIMENTS

A specific example of a laminated plate according to an embodiment of the present invention is described below by referring to the accompanying drawings.

Note that, in some figures for describing the embodiment, coordinates are defined by arrows at lower left portions of the figures, and the embodiment is described by using these coordinates, depending on necessity. Additionally, in this specification, "X-direction" refers not only to a direction from an origin toward a tip of the arrow representing the X coordinate, but also to a direction from the tip toward the origin, which is reversed by 180 degrees. Similarly, "Y-direction" refers not only to a direction from an origin toward a tip of the arrow representing the Y coordinate, but also to a direction from the tip toward the origin, which is reversed by 180 degrees; and "Z direction" refers not only to a direction from an origin toward a tip of the arrow representing the Z coordinate, but also to a direction from the tip toward the origin, which is reversed by 180 degrees. Note that the X-direction may also be referred to as a first direction, and that the Y-direction may also be referred to as a second direction.

In addition, in this specification, each of the terms, such as "parallel" and "perpendicular," allows a deviation to an extent that an effect of the embodiment of the present invention is not lost. For example, an error to the extent of ± 5° is allowed with respect to, as references, a strictly parallel positional relationship and a strictly perpendicular positional relationship.

Additionally, in this specification, it is assumed that vertical and horizontal directions represent the corresponding directions in the referred figure, unless specified as otherwise, and that the figure is viewed in the orientation with which the reference numerals can be correctly read.

In this specification, for a case of laminated glass, vertically slidable laminated glass for a side door of a vehicle is specifically described below, as a typical example of a laminated plate. However, the laminated plate is not limited to the slidable laminated glass. For example, the laminated plate may be laminated glass to be adopted for a fixed window, such as a windshield and roof glass of a vehicle.

Furthermore, the
laminated glass may preferably be used as cover glass for an electronic device.

### (Embodiment)

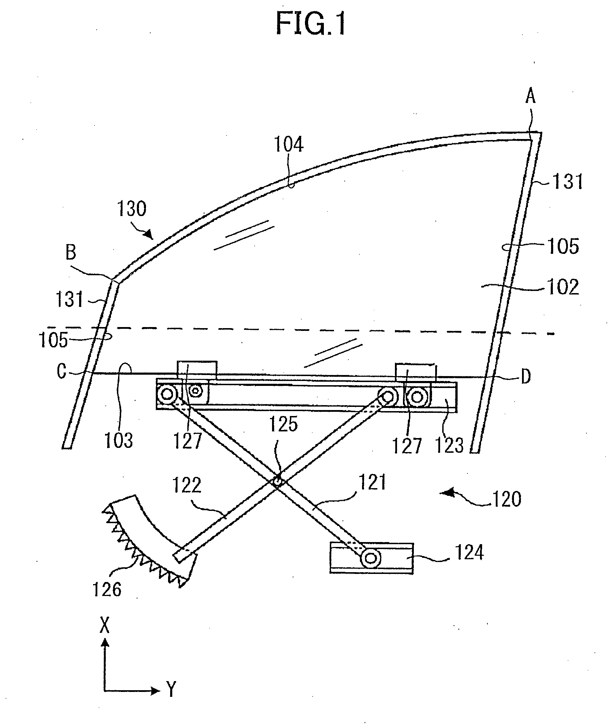

FIG. 1 is a configuration diagram illustrating a state where a slidable laminated glass plate 102 for a vehicle according to the embodiment is assembled for a vehicle.

In the embodiment, the laminate glass plate 102 for a vehicle is to be installed in a door of a vehicle, and the laminated glass plate 102 is to be moved up and down along a window frame 130 by an elevator 120. In particular, portions of the window frame 130 that support side edges of the laminated glass plate 102 for a vehicle may also be referred to as glass runs 131. The elevator 120 is an arm type regulator, and the elevator 120 is formed of, for example, two arms 121 and 122; an elevation rail 123; a fixed rail 124; and a regulator. Here, the dashed line in the figure schematically illustrates a position of a lower end of the opening (a belt line) of a door of a vehicle.

The two arms 121 and 122 are mutually connected, so that the two arms 121 and 122 can pivot around a fulcrum 125, such as a shaft. The elevation rail 123 extends in the horizontal direction, and the elevation rail 123 can move up and down with respect to the door of the vehicle. Both upper ends of the arms 121 and 122 are attached to the elevation rail 123, so that the upper ends of the arms 121 and 122 can be slid in the horizontal direction. The fixed rail 124 also extends in the horizontal direction, and the fixed rail 124 is fixed with respect to the door of the vehicle. A lower end of the arm 121 is attached to the fixed rail 124, so that the lower end of the arm 121 can be slid in the horizontal direction; and a lower end of the arm 122 is connected to the regulator through a gear 126. In such a configuration, upon the gear 126 being driven through the regulator, the elevation rail 123 moves up and down, as the arms 121 and 122 pivot around the fulcrum 125, such as the shaft. Note that the elevator 120 is not limited to this configuration. For example, the elevator 120 may be an elevator in which a wire is used.

Holders 127 are attached to a lower edge 103 of the laminated glass plate 102 for a vehicle, and the holders 127 are assembled to the elevation rail 123 of the elevator 120.

In such a state, during opening and closing of the window by vertically sliding the laminated glass plate 102 for a vehicle, an upper edge 104 of the laminated glass plate 102 for a vehicle is an edge that is exposed when the laminated glass plate 102 is opened; and a load may often be applied to the exposed upper edge 104, if a passenger leans against the upper edge 104, or if the vehicle travels at high speed while the window is half-opened. Especially, loads concentrate on corner edges of end portions A and B, which are fixed to the glass runs 131. Thus, sufficient strength is required for each of the corner edges of the end portions A and B, so as to bear the external force.

Additionally, upon nipping foreign material during closing the window, a local external force may be applied to the upper edge 104.

Side edges 105 of the laminated glass 102 for a vehicle slide against respective glass runs 131 during up and down movement of the laminated glass 102, so that loads are applied to the side edges 105 due to friction. Especially, when moving the laminated glass 102 downward, large loads are applied to the corner edges of the end portions C and D, respectively; and when moving the laminated glass 102 upward, large loads are applied to the corner edges of the end portions A and B, respectively.

If foreign materials, such as sand and small stones, enter the glass runs 131, and the laminated glass plate 102 for a vehicle is moved up and down while taking in the sand and the small stones, a load is applied to the entire side edge 105.

Furthermore, the elevator 120, which is a power source of sliding, is attached to the lower edge 103 of the laminated glass plate 102 for a vehicle, so that a load is applied to the lower edge 103 due to driving the elevator 120.

In this manner, various types of external force are applied to the circumference of the slide window, and loads are especially concentrated at the corner edges. Thus, it is necessary that the corner edges have sufficient strength.

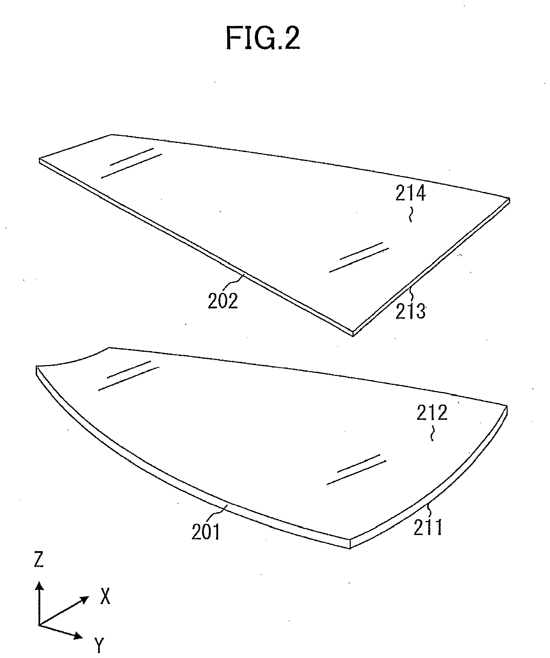

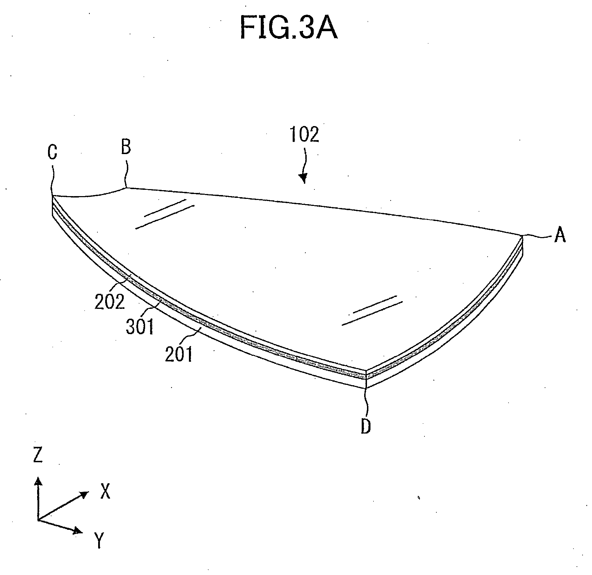

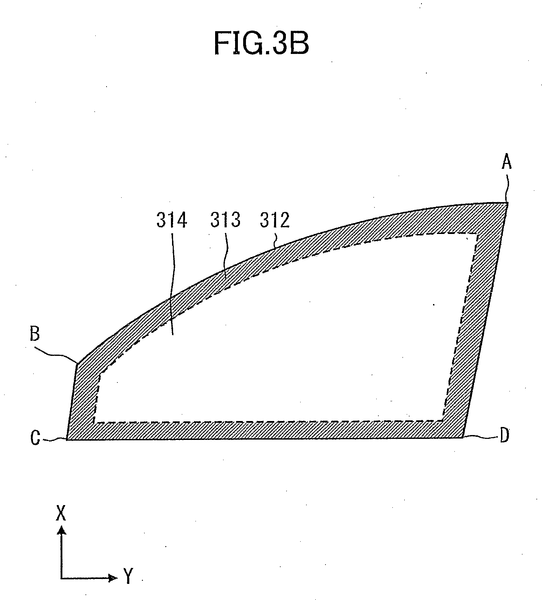

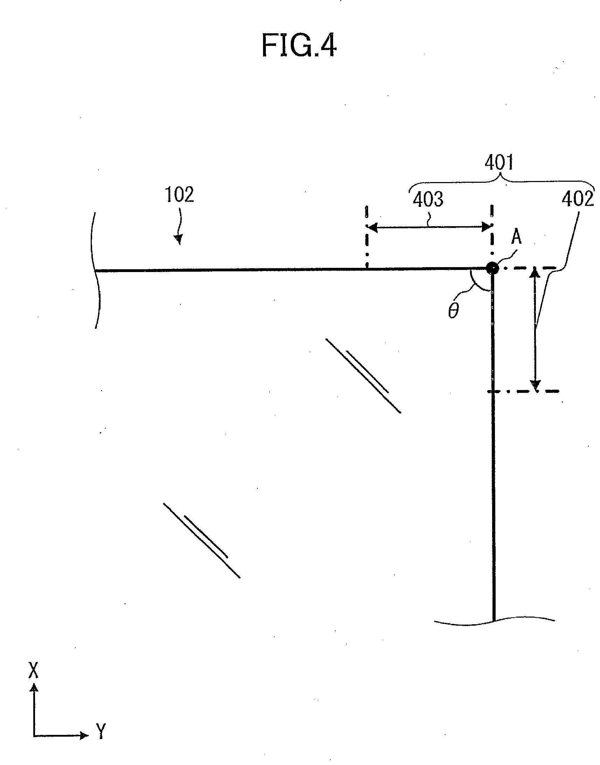

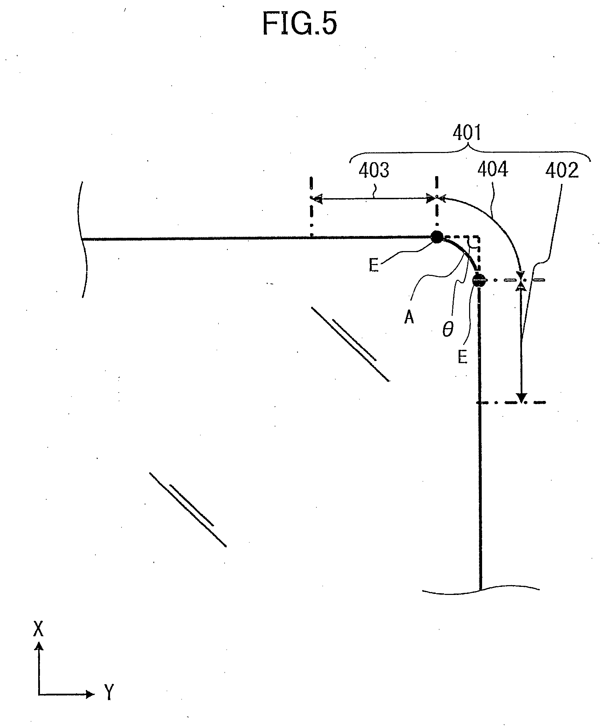

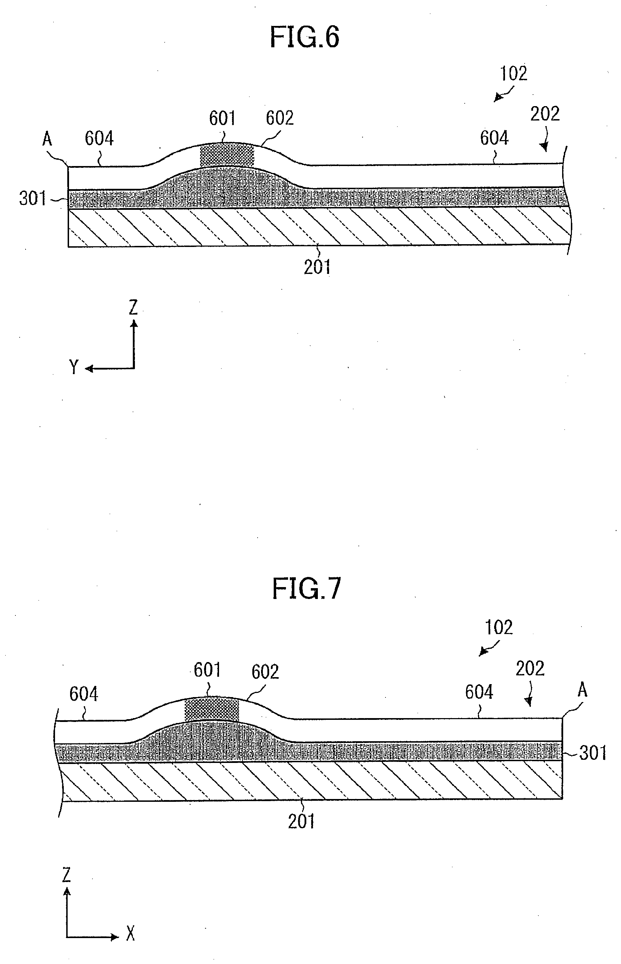

FIG. 2 is a diagram of the first glass plate and the second glass plate prior to lamination. FIG. 3A is a perspective view of the laminated glass plate 102 for a vehicle according to the embodiment. FIG. 3B is a plane view of the laminated glass 102 for a vehicle according to the embodiment. FIG. 4 is a diagram illustrating a definition of the corner edge. FIG. 5 is a diagram illustrating the definition of the corner edge for a case where a corner is chamfered. FIG. 6 is a schematic diagram of the corner edge according to the embodiment, which is observed in a YZ plane. FIG. 7 is a schematic diagram of the corner edge according to the embodiment, which is observed in a XZ plane.

The laminated glass plate 102 for a vehicle according to the embodiment includes a first glass plate 201 that is curved in a first curved shape; and a second glass plate 202 that has a second shape that is different from the first curved shape, and the first glass plate 201 and the second glass plate 202 are bonded by an intermediate film 301.

The first glass plate 201 includes a first main surface 211 that is the surface opposite to a second main surface 212 of the first glass plate 201 contacting the intermediate film 301; and the second main surface 212 that contacts the intermediate film 301. The second glass plate 202 includes a third main surface 213 that contacts the intermediate film 301; and a fourth main surface 214 that is the surface opposite to the third main surface 213 of the second glass plate 202 contacting the intermediate film 301. The intermediate film 301 is disposed between the second main surface 212 and the third main surface 213, and the laminated glass plate 102 is formed by bonding the second main surface 212 and the third main surface 213 (FIG. 3A).

If bonding between the first glass plate 201 and the second glass plate 202 by the intermediate film 301 were released, the first glass plate 201 and the second glass plate 202 would be returned to their natural states prior to bonding. Here, as shown in FIG. 2, a radius of curvature of the second main surface 212 may be smaller than a radius of curvature of the third main surface 213, both in a cross section corresponding to a transverse section and in a cross section corresponding to a longitudinal section.

Among cross sections including a normal line at the centroid of the first main surface 211, the cross section in which the radius of curvature of the first main surface 211 becomes the maximum is referred to as the transverse section; and the cross section perpendicular to the transverse section is referred to as the longitudinal section. The direction along the transverse section is defined to be a first direction; and the direction perpendicular to the first direction, i.e., the direction along the longitudinal section is referred to as a second direction. For example, the first direction may be the Y-direction of FIG. 2, and the second direction may be the X-direction of FIG. 2.

In such a bonding state, bending compressive stress is generated at least in a portion of an outer periphery of the fourth main surface 214, which is in a bonding state. At that portion, the surface is hardly damaged.

Note that the radius of curvature in each cross section may be represented by a curvature of a circle that passes through three points, which are both ends of the first main surface 211 and the centroid of the first main surface 211. Not only the curved portion, but also a flat portion may be provided between both ends of the first main surface 211.

The plate thickness of the first glass plate 201 is greater than or equal to 1.5 mm and less than or equal to 4.0 mm; and the plate thickness of the second glass plate 202 is greater than or equal to 0.2 mm and less than 1.0 mm.

The plate thickness of the first glass plate 201 may more preferably be greater than or equal to 1.8 mm and less than or equal to 3.5 mm; and the plate thickness of the first glass plate 201 may further preferably be greater than or equal to 2.0 mm and less than or equal to 3.0 mm.

Additionally, the thickness of the second glass plate 202 may more preferably be greater than or equal to 0.2 mm and less than or equal to 0.9 mm; and the thickness of the second glass plate 202 may further preferably be greater than or equal to 0.3 mm and less than or equal to 0.8 mm.

Furthermore, a ratio between the plate thickness of the first glass plate 201 and the plate thickness of the second glass plate 202 may preferably be greater than or equal to 0.1 and less than or equal to 0.5; and the ratio between the plate thickness of the first glass plate 201 and the plate thickness of the second glass plate 202 may more preferably be greater than or equal to 0.15 and less than or equal to 0.4.

By the above adjustment, if the first glass plate 201 and the second glass plate 202 are laminated, an amount of elastic deformation of the first glass plate 201 can be made smaller than an amount of elastic deformation of the second glass plate 202. Namely, by molding, in advance, the first glass plate 201 to have a curved shape to be assembled to a body of a vehicle, upon using as the laminated glass plate 102 for a vehicle, a deviation from the curved shape to be assembled to the body of the vehicle can be reduced.

By setting the plate thickness of the first glass plate 201 to be greater than the plate thickness of the second glass plate 202, the stiffness required as the laminated glass plate 102 for a vehicle can be obtained, while reducing the plate thickness of the second glass plate 202. In this manner, the weight of the laminated glass plate 102 for a vehicle can be reduced. The first glass plate 201 may preferably have a stiffness that is greater than the stiffness of the second glass plate 202 by adjusting the plate thickness or a composition.

Upon forming the laminated glass plate 102 for a vehicle, the area of the second glass plate 202 may be smaller than the area of the first glass plate 201.

For example, in the entire circumference of the laminated glass 102 for a vehicle, the peripheral edge of the second glass plate 202 may exist inside the peripheral edge of the the first glass plate 201.

Alternatively, only a part of the peripheral edge of the second glass plate 202, such as only the lower edge 103, may exist inside the peripheral edge of the first glass plate 201.

Alternatively, only a part of the edge of the peripheral edge of the second glass plate 202, such as the portion where the holder 127 is installed, may exist inside the peripheral edge of the first glass plate 201.

In this manner, by disposing the peripheral edge of the second glass plate inside the peripheral edge of the first glass plate 201, the laminated glass plate 102 for a vehicle can be configured such that, upon external force being applied to the laminated glass plate 102 for a vehicle, the external force is hardly applied to the edge of the second glass plate 202, which has thickness that is less than the thickness of the first glass plate 201, and which has strength that is less than the strength of the first glass plate 201. Namely, the corner edges of the laminated glass 102 for a vehicle can be prevented from being broken.

In FIG. 2, the first curved shape is a multi-curved shape such that the first curved shape is curved both in the first direction (e.g., the Y-direction) and in the second direction (e.g., the X-direction), which is perpendicular to the Y-direction

By designing the first curved shape to be such a multi-curved shape, superior-design window glass for a vehicle can be made, so that various design needs for vehicle design can be satisfied.

Especially, in usual laminated glass that is formed by laminating two glass plate having different curved shapes, so that the two glass plates firmly adhered to each other through an intermediate film, if the first curved shape is a multi-curved shape, upon using the laminated glass as the laminated glass plate 102 for a vehicle, the strength of the corner edges tends to be insufficient. In contrast, according to the embodiment, the corner edges can be prevented from being broken. Details are described below.

However, the first curved shape is not limited to the shape disclosed in the embodiment. For example, the first curved shape may be a single-curved shape (a cylindrical shape) that is curved in one of the X-direction and the Y-direction.

In FIG. 2, a case is illustrated where the second glass plate 202 has a flat plate shape, which is not curved. However, the shape of the second glass plate 202 is not limited to the shape disclosed in the embodiment. The second glass plate 202 may be curved only in the X-direction or in the Y-direction; or the second glass plate 202 may be curved both in the X-direction and in the Y-direction.

Namely, it suffices if the second shape is different from the first curved shape. A radius of curvature of the third main surface 213 in a first specific cross section among the cross sections including a normal line at the centroid of the third main surface 213 may be greater than or less than the radius of curvature of the first main surface 211 in a second specific cross section. The second specific cross section is in a direction that is the same as the direction of the first specific cross section, and the second specific cross section passes through the centroid of the first main surface 211. Furthermore, the second shape may be a flat plate shape (the radius of curvature is infinite). If the second shape is the flat plate shape, it is not necessary to form the second shape by bending, thereby facilitating production.

If the second glass plate 202 is curved in the X-direction and/or in the Y-direction, and the second glass plate 202 has a radius of curvature that is close to the radius of curvature of the first curved shape, an amount of elastic deformation of the second glass plate 202 is small. Thus, if such a second glass plate 202 is used for the laminated glass 102 for a vehicle, the edge strength can be prevented from being lowered.

Especially, if the first curved shape is the multi-curved shape, and if, even only in one of the X-direction and the Y-direction in which a radius of curvature is small, the second glass plate 202 is curved to have a radius of curvature that is close to the radius of curvature of the first curved shape, an amount of elastic deformation of the second glass plate 202 is small for a case where the second glass plate 202 is used for the laminated glass plate 102 for a vehicle. Thus, if such a second glass plate 202 is used for the laminated glass plate 102 for a vehicle, the edge strength can be prevented from being lowered.

The radius of curvature of the third main surface 213 in a specific cross section among the cross sections including the normal line at the centroid of the third main surface 213 may preferably be within a range, which includes a middle value, from a lower value that is 5 times as small as (1/5 of) the middle value to an upper value that is 5 times as large as the middle value; more preferably be within a range from a lower value that is 4 times as small as (1/4 of) the middle value to an upper value that is 4 times as large as the middle value; and further preferably be within a range from a lower value that is 3 times as small as (1/3 of) the middle value to an upper value that is 3 times as large as the middle value. Here, the middle value is the radius of curvature of the first main surface 211 in a cross section that is in the same direction as the direction of the specific cross section of the third main surface 213 and that passes through the centroid of the first main surface 211. If such a second glass plate 202 is used for the laminated glass plate 102 for a vehicle, the edge strength can be prevented from being lowered. Here, the specific cross section of the third main surface 213 may be in the first direction.

The radius of curvature of the third main surface 213 in a specific cross section among the cross sections including the normal line at the centroid of the third main surface 213 may preferably be out of a range, which includes a middle value, from a lower value that is 1.1 times as small (1/1.1 of) as the middle value to an upper value that is 1.1 times as large as the middle value; more preferably be out of a range from a lower value that is 1.3 times as small as (1/1.3 of) the middle value to an upper value that is 1.3 times as large as the middle value; and further preferably be out of a range from a lower value that is 1.5 times as small as (1/1.5 of) the middle value to an upper value that is 1.5 times as large as the middle value. Here, the middle value is the radius of curvature of the first main surface 211 in a cross section that is in the same direction as the direction of the specific cross section of the third main surface 213 and that passes through the centroid of the first main surface 211. Deviations in shaping the second glass plate 202 can be tolerated. The second glass plate 202 may be shaped by a more flexible bending process, compared to the first glass plate 201. Alternatively, the second glass plate 202 may be shaped without bending. Here, the specific cross section of the third main surface 213 may be in the first direction.

The laminated glass plate 102 for a vehicle according to the embodiment includes the first glass plate 201 that is curved in the first curved shape; and the second glass plate 202 that has the second shape that is different from the first curved shape, and the first glass plate 201 and the second glass plate 202 are bonded by the intermediate film 301. Note that, if bonding between the first glass plate 201 and the second glass plate 202 by the intermediate film 301 is released, and if the radius of curvature of the first main surface in the first direction is the middle value, the radius of curvature of the third main surface in the first direction is out of the first range from the first lower value that is 1.1 times as small as the middle value and the first upper value that is 1.1 times as large as the middle value, and the radius of curvature of the third main surface in the first direction is in the second range from the second lower value that is 5 times as small as the middle value and the second upper value that is 5 times as large as the middle value.

In the embodiment, the second glass plate 202 may preferably be a chemically strengthened glass plate. Namely, the glass plate used in the embodiment is not particularly limited, as long as ion exchange can be made. For example, the glass plate may be suitably selected from soda-lime glass, aluminosilicate glass, and so forth, and the selected glass plate may be used.

As an example of the composition of the glass plate used in the embodiment, glass can be considered that has a composition represented in mol% on the oxide basis: 50 to 80% SiO₂; 0 to 10% B₂O₃; 0.1 to 25% Al₂O₃; 3 to 30% Li₂O + Na₂O + K₂O; 0 to 25% MgO; 0 to 25% CaO; 0 to 5% SrO; 0 to 5% BaO; 0 to 5% ZrO₂; and 0 to 5% SnO₂. However, the composition of the glass is not particularly limited. More specifically, the following compositions of the glass can be considered. Note that, for example, "including 0 to 25% MgO" means that MgO is not required; however, MgO may be included up to 25%.
(i) glass that includes, as a composition represented in mol%: 63 to 73% SiO₂; 0.1 to 5.2% Al₂O₃; 10 to 16% Na₂O; 0 to 1.5% K₂O; 5 to 13% MgO; and 4 to 10% CaO;
(ii) glass that includes, as a composition represented in mol%: 50 to 74% SiO₂; 1 to 10% Al₂O₃; 6 to 14% Na₂O; 3 to 11% K₂O; 2 to 15% MgO; and 0 to 6% ZrO₂, wherein the total content of SiO₂ and Al₂O₃ is less than or equal to 75%, wherein the total content of Na₂O and K₂O is 12 to 25%, and wherein the total content of MgO and CaO is 7 to 15%;
(iii) glass that includes, as a composition represented in mol%: 68 to 80% SiO₂; 4 to 10% Al₂O₃; 0 to 1% K₂O; 4 to 15% MgO; and 0 to 1% ZrO₂;
(iv) glass that includes, as a composition represented in mol%: 67 to 75% SiO₂; 0 to 4% Al₂O₃; 7 to 15% Na₂O; 1 to 9% K₂O; 6 to 14% MgO; and 0 to 1.5% ZrO₂, wherein the total content of SiO₂ and Al₂O₃ is 71 to 75%, wherein the total content of Na₂O and K₂O is 12 to 20%, and wherein, if CaO is included, the content of CaO is less than 1%, and
(v) glass that includes, as a composition represented in mol%: 60 to 70% SiO₂; 0 to 10% B₂O₃; 8 to 15% Al₂O₃; 10 to 17% Na₂O; 0 to 3% K₂O; 0 to 10% MgO; 0 to 1% CaO; and 0 to 1% ZrO₂, wherein the total content of SiO₂ and Al₂O₃ is 76 to 81%, and wherein the total content of Na₂O and K₂O is 13 to 16%.

Further, the second glass plate 202 may preferably be transparent. Due to the transparency, the second glass plate 202 does not absorb near infrared in a low wavelength region. Consequently, during production according to the first embodiment as described below, the intermediate film 301 can be sufficiently heated. Here, "transparent" means that an amount of transmitting visible light is greater than or equal to 80%. Furthermore, since the second plate is transparent, a unique texture may be obtained to appear as if the first plate were coated with the second plate, thereby obtaining a laminated plate with a superior design.

The first glass plate 201 is not particularly limited. However, the first glass plate 201 may preferably have a composition represented in weight percent (wt.%) : 65 to 75% SiO₂; 0.1 to 5% Al₂O₃; 5 to 10% CaO; 2 to 5% MgO; 10 to 15% Na₂O; 0 to 3% K₂O; 0.2 to 3% Fe₂O₃. With the above-described composition, the first glass plate 201 can absorb near infrared in a low wavelength region. Thus, the above-described composition is particularly preferred.

The composition of the intermediate film 301 may be a generic composition that can be used for usual laminated glass for a vehicle. For example, polyvinyl butyral (PVB) or ethylene vinyl acetal (EVA) can be used. Additionally, a thermosetting resin can be used, which has a liquid state prior to heating. Namely, it suffices if the intermediate film 301 is a solid film after forming the laminated glass. Prior to bonding the glass plates, the intermediate film 301 may be in a liquid state.

The intermediate film 301 having a thickness of, for example, greater than or equal to 0.5 mm and less than or equal to 4 mm may preferably be used.

Additionally, the intermediate film 301 formed by mixing an infrared absorbing agent may be used. As a material of the infrared absorbing agent, for example, fine particles formed of the following materials are exemplified: metals, oxides, nitrides, sulfides of Sn, Sb, Ti, Si, Zn, Zr, Fe, Al, Cr, Co, Ce, Cs, In, Ni, Ag, Cu, Pt, Mn, Ta, W, V , and Mo; and doped materials obtained by doping Sb or F in these materials. These fine particles can be used alone, or used as a composite. Further, a mixture obtained by mixing a single material of these materials or a composite of these materials in an organic resin, or a cover material obtained by coating the single material or the composite materials with organic resin may be used. Further, as the infrared absorbing agents, a coloring agent, a dye, or an organic material (e.g., phthalocyanine, or naphthalocyanine) may be used.

For a heads up display (HUD), the cross section of the intermediate film 301 may be wedge-shaped. Additionally, the intermediate film 301 may have a multi-layered structure obtained by laminating, in the thickness direction, a plurality of intermediate films having different viscosities.

In the embodiment, the corner edge 401 of the laminated glass plate 102 for a vehicle does not have a fold. By this structure, if the laminated glass plate 102 is formed, the strength of the edge can be prevented from being lowered. Especially, in the laminated glass 102, the second glass plate 202 may preferably not include a fold. Then, the laminated glass may hardly be broken. In this specification, a "fold" means a deformation that occurs locally in the glass plate in the plate thickness direction.

In the embodiment, a standard deviation of the plate thickness at the corner edge 401 of the laminated glass plate 102 for a vehicle is less than 0.038 mm; more preferably be less than or equal to 0.035 mm; further preferably be less than or equal to 0.030 mm, and further more preferably be less than or equal to 0.020 mm.

Additionally, a difference between the maximum value and the minimum value of the plate thickness at the corner edge 401 may preferably be less than 0.1 mm; more preferably be less than or equal to 0.095 mm; further preferably be less than or equal to 0.072 mm; and further more preferably be less than or equal to 0.046 mm.

In this specification, the corner edge 401 is defined to be, in the edge of the laminated glass plate 102 for a vehicle, a range from the end portion A to a point that is separated from the end portion A by a distance 402 in the X-direction, and a range from the end portion A to a point that is separated by a distance 403 in the Y-direction, as illustrated in FIG. 4. Namely, in FIG. 4, the corner edge 401 is the portion of the edge corresponding to the distance 402 + the portion of the edge corresponding to the distance 403. Similarly, the corner edge of the end portion B is the portion of the edge corresponding to a predetermined distance from the end portion B in the X-direction and the portion of the edge corresponding to a predetermined distance from the end portion B in the Y-direction; the corner edge of the end portion C is the portion of the edge corresponding to a predetermined distance from the end portion C in the X-direction and the portion of the edge corresponding to a predetermined distance from the end portion C in the Y-direction; and the corner edge of the end portion D is the portion of the edge corresponding to a predetermined distance from the end portion D in the X-direction and the portion of the edge corresponding to a predetermined distance from the end portion D in the Y-direction. Each of the distances 402 and 403 may be 25 mm, for example.

Here, for a case where the end portion A is chamfered, the corner edge 401 is defined to be, in the edge of the laminated glass plate 102 for a vehicle, the portion of the edge corresponding to the length 404 of the arc R, which is formed by chamfering; the portion of the edge corresponding to a range from a point E, at which a gradient of a tangential line of the arc R is 0, to a point that is separated from the point E by the distance 402 in the X-direction; and the portion of the edge corresponding to a range from another point E, at which a gradient of a tangential line of the arc R is 0, to a point that is separated from the other point E by the distance 403 in the Y-direction, as illustrated in FIG. 5. Namely, in FIG. 5, the corner edge 401 is the portion of the edge corresponding to the distance 402 + the portion of the edge corresponding to the length 404 of the arc R + the portion of the edge corresponding to the distance 403. Similarly, the corner edges of the end portions B, C, and D are defined.

The plate thickness of the laminated glass plate 102 at the corner edge 401 is measured at each 5 mm interval at a position that is separated from the peripheral edge 312 of the glass plate by 5 mm toward inside the surface, along the corner edge 401.

Additionally, in this specification, the maximum value and the minimum value of the plate thickness at the corner edge 401 are defined to be, for example, the maximum value and the minimum value among 11 measured values of the plate thickness of the corner edge 401. The 11 measured values are obtained by measuring the plate thickness of the corner edge 401 at corresponding 11 points, which are evenly spaced by 5 mm.

By adjusting the standard deviation of the plate thickness at the corner edge 401 of the laminated glass plate 102 for a vehicle to be within the above-described range, after forming the laminated glass plate 102, the strength of the edge can be prevented from being lowered.

Further, by adjusting the difference between the maximum value and the minimum value of the plate thickness at the corner edge to be the above-described value, the strength of the edge can be prevented from being lowered.

The reason may be as follows.

In the embodiment, the second glass plate 202 of the laminated glass plate 102 for a vehicle is forced, by the intermediate film 301, to elastically deform, so that the shape of the second glass plate 202 follows the first curved shape, which is different from the original shape of the second glass plate 202. As a result, bending compressive stress is generated at least at a portion of the outer periphery of the fourth main surface 214, which is in a bonding state. Usually, the surface of that portion is hardly damaged. However, if the bending compressive stress is too large, a fold may be formed at that portion. For example, as illustrated in FIG. 6, a fold 602 is formed at a portion of the second glass plate 202. Note that, in FIG. 6, the fold 602 is not precisely scaled, and the fold 602 is emphasized for the description. In FIG. 6, the fold 602 is deformed in a convex shape with respect to the fourth main surface 214. However, the fold 602 may be deformed in a concave shape.

In the second glass plate 202, tensile stress is locally generated in the fold 602 (a tensile stress portion 601). If the tensile stress portion 601 is formed in the second glass plate 202, the edge strength is locally lowered at the tensile stress portion 601.

Namely, as illustrated in FIG. 6, if the tensile stress portion 601 exists in the Y-direction along the upper edge, in the corner edge 401 of the end portion A, upon receiving a load, which is caused when the laminated glass 102 is opened, by a passenger by leaning on the laminated glass 102 or by traveling at high speed, being concentrated on the corner edge 401, the tensile stress portion 601, at which the tensile stress is originally generated, tends to be broken, which lowers the edge strength of the corner edge 401.

Note that such a fold of the second glass plate 202 tends to be generated, especially if the first curved shape is a multi-curved shape. In this case, the tensile stress portion 601 tends to be generated, so that the edge strength tends to be lowered.

In the embodiment, the standard deviation of the plate thickness at the corner edge 401 of the laminated glass plate 102 for a vehicle is less than 0.038 mm; more preferably be less than or equal to 0.035 mm; further preferably be less than or equal to 0.030 mm, and further more preferably be less than or equal to 0.020 mm. Thus, the tensile stress portion 601 is prevented from being formed. Even if the tensile stress portion 601 is formed, the value of the tensile stress can be lowered. As a result, cracking in the corner edge 401 can be reduced.

Additionally, since the second glass plate 202 includes, at the corner edge 401, the convex deformed portion 602 such that the standard deviation of the plate thickness is within a range that is less than 0.038 mm, the second glass plate 202 can be deformed, so that the shape of the second glass plate 202 follows the first curved shape, which is different from the second shape of the second glass plate 202.

Further, for a case where the laminated plate is for a window, as in the embodiment, if there is optical distortion in the vicinity of the corner edge 401, a scene that is viewed through the portion of the window is distorted. Thus, appearance quality is not preferable. By setting the standard deviation of the plate thickness at the corner edge 401 to be less than or equal to 0.03 mm; and more preferably be less than or equal to 0.02 mm, the optical distortion in the vicinity of the corner edge 401 can be improved, so that laminated glass plate 102 for a vehicle with higher quality can be obtained.

Further, as illustrated in FIG. 7, if the tensile stress portion 601 exists in the X-direction along the side edge, in the corner edge 401 of the end portion A, upon sliding the laminated glass plate 102 for a vehicle, which is assembled to the vehicle as illustrated in FIG. 1, upward in the X-direction along the glass run 131, the tensile stress portion 601 tends to crack due to a load, which is caused by the friction with the glass run 131, applied to the tensile stress portion 601, which lowers the edge strength of the corner edge 401. Similarly, if sand enters the groove of the glass run 131, by the sliding the laminated glass plate 102 while contacting the sand and taking in the sand, the tensile stress portion 601 tends to crack due to a load, which lowers the edge strength of the corner edge 401.

For a case of a fixed window, instead of a slidable window, a resin frame, which may be referred to as molding, is formed at a glass peripheral portion 313 by injection molding. However, for a usual glass plate obtained by laminating, through an intermediate film, two plates having different curved shapes, the glass plate may be broken during the injection molding. Furthermore, the glass plate may be broken by pressure during assembling to the vehicle.

Since the tensile stress portion 601 is formed at the corner edge 401 and a peripheral edge 312 of the glass plate, the pressure during injection molding is applied so as to crush the fold 602. Thus, greater tensile stress is generated in the tensile stress portion 601, so that cracks may occur at the corner edge 401 and the peripheral edge 312 of the glass plate.

Here, the glass peripheral portion 313 represents the area indicated by the oblique lines in FIG. 3B. For example, it is an area that is within 20 mm from the peripheral edge 312 of the laminated glass plate 102 for a vehicle in a direction toward the surface.

Similarly, for these cases, the standard deviation of the plate thickness at the corner edge 401 of the laminated glass plate 102 for a vehicle is less than 0.038 mm; preferably be less than or equal to 0.035 mm; more preferably be less than or equal to 0.03 mm; and further more preferably be less than or equal to 0.02 mm. Thus, the tensile stress portion 601 can be prevented from being formed, and even if the tensile stress portion 601 is formed, the value of the tensile stress can be reduced. Consequently, cracking at the corner edge 401 can be reduced.

In addition, the peripheral edge of the laminated glass plate 102 may include a wave-like deformed portion such that the standard deviation of the plate thickness is in a range that is less than or equal to 0.02 mm. The second glass plate 202 can be deformed, so that the shape of the second glass plate 202 follows the first curved shape, which is different from the second shape of the second glass plate 202. In this specification, the wave-like deformed portion is defined to be deformation in the plate thickness direction, which is easier than a fold. The wave-like deformed portion may be formed in a convex shape or in a concave shape with respect to the fourth main surface 214, for example. A plurality of continuous wave-like deformed portions may be formed, or a single wave-like deformed portion may be formed.

Furthermore, by setting the standard deviation of the plate thickness at the corner edge 401 to be less than or equal to 0.03 mm; more preferably be less than or equal to 0.02 mm, the optical deformation in the vicinity of the corner edge 401 can be improved, and thereby a higher-quality laminated glass plate 102 for a vehicle can be obtained.

As in the present embodiment, by setting the standard deviation of the plate thickness only at the corner edge 401 of the end portion A to be less than 0.038 mm, after forming the laminated glass plate 102, the edge strength can be prevented from being lowered at the end portion A, and damaging at the corner edge 401 can be reduced. For example, it is effective for an environment where a load tends to be concentrated on the end portion A, due to assembly of the laminated glass plate 102 for a vehicle.

In addition, the standard deviation of the plate thickness at two adjacent corner edges may preferably be less than 0.038 mm. For example, if the standard deviation of the plate thickness at the end portion A and at the end portion B is less than 0.038 mm, cracks can be prevented from occurring, which may be caused, when the window is opened, by a passenger by leaning, or by traveling at high speed. If the standard deviation of the plate thickness at the end portion A and at the end portion D is less than 0.038 mm, cracks can be prevented from occurring, which may be caused by a load received from the glass run 131 during raising and lowering the window.

In particular, if the window is half-opened, while the vehicle is traveling, foreign material, such as sand, tends to be accumulated in the glass run 131. Thus, if the standard deviation of the plate thickness at the end portion A and at the end portion D is less than 0.038 mm, cracks at the corner edge 401 can be reduced. In this case, the end portion A is the first corner edge, and the end portion B or the end portion D is the second corner edge adjacent to the first corner edge.

If one corner edge 401 is the first corner edge, the standard deviation of the plate thickness at the first corner edge and at two corner edges adjacent to the first corner edge (the second corner edge and the third corner edge) may preferably be less than 0.038 mm, so that cracks at the corner edge 401 can further be reduced.

The standard deviation of the plate thickness at all the corner edges may further preferably be less than 0.038 mm, so that cracks at all the corner edges can be reduced.

In addition, the standard deviation of the plate thickness at any one of the edges may further preferably be less than 0.038 mm, so that cracks can be reduced not only at the corner edges, but also at the peripheral edge 312. Due to pinching a foreign material during closing the window, for example, localized external force may be applied to the upper edge 104. Thus, if the standard deviation of the plate thickness at the upper edge 104 is less than 0.038 mm, after forming the laminated glass plate 102, the edge strength can be prevented from being lowered, and damage can be reduced.

The plate thickness of the laminated glass plate 102 for a vehicle at one edge is measured, for example, along the peripheral edge 312 of the one edge at 5 mm intervals at a position that is separated from the peripheral edge 312 of the laminated glass plate 102 by 5 mm toward inside the surface.

On a central area 314 that occupies a portion of the laminated glass plate 102 inside the peripheral edge 312, the standard deviation of the plate thickness may be less than or equal to 0.03 mm; more preferably be less than or equal to 0.02 mm. By adjusting the standard deviation to be such values, a high-quality laminated glass plate 102 for a vehicle can be obtained such that, in the central area 314, optical distortion is reduced, with which a driver and a passenger may feel discomfort.

If the standard deviation of the plate thickness is less than 0.038 mm at a corner edge at which two edges of the laminated glass 102 for a vehicle meet with an angle θ (which is referred to as the corner edge angle θ, hereinafter) that is less than or equal to 90 degrees, more preferably less than or equal to 80 degrees, the effect that the corner edge is prevented from being damaged can be enhanced.

In a corner edge with a corner edge angle that is less than or equal to 90 degrees, cracks tend to occur from the corner edge.

For a case where the end portion is chamfered as illustrated in FIG. 5, the corner edge angle is defined to be an angle with which lines obtained by extending two edges of the corner edge cross.

Further, a display member, such as an organic EL panel, may be sealed in the laminated glass plate 102 according to the embodiment. If the plate thickness of the second glass 202 is small and the stiffness is small, as in the embodiment, during sealing, the display member or the laminated glass plate 102 is hardly broken, so that the second glass plate 202 may preferably be used. It is considered that the second glass plate 202 is adapted to the shape of the display member.

Furthermore, if the display member is sealed in the laminated glass plate 102, so that the display member can be viewed from the side of the second glass plate 202, the first glass plate 201 may be formed of glass with low visible light transmittance. Due to the low visible light transmittance of the first glass plate 201 serving as a background, the display member can be easily viewed. However, it may be difficult to view the display member from the side of the first glass plate 201.

### (Manufacturing method and manufacturing apparatus according to the embodiment)

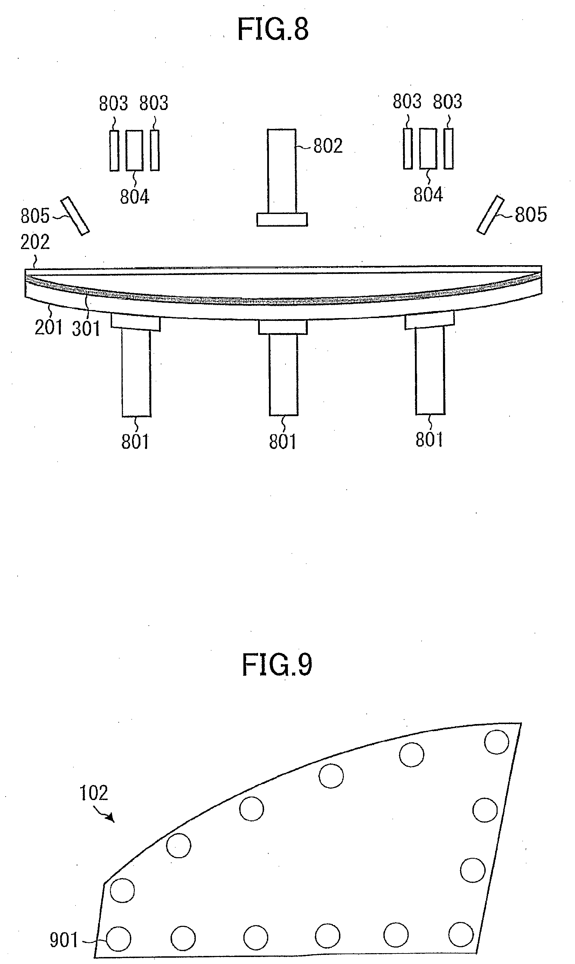

FIG. 8 is a schematic diagram illustrating an example of a manufacturing apparatus of the laminated glass plate 102 for a vehicle according to the embodiment.

A first suction pad 801 supports the first glass plate 201 with the first curved shape. A second suction pad 802 is connected to an elevating drive unit, which is not depicted, and the second suction pad 802 presses the second glass plate 202, so that a surface of the second glass plate 202 contacts a surface of the first glass plate 201 through the intermediate film 301.

In the vicinity of a welding head 804, a pressing unit 803 is provided, and the welding head 804 is connected to an elevating drive unit, which is not depicted. While pressing, with a pad similar to the second suction pad 802, the second glass plate 202, so that the surface of the second glass plate 202 contacts the surface of the first glass plate 201 through the intermediate film 301, the welding heads 804 bond the first glass plate 201 and the second glass plate 202 with the intermediate film 301 by heating the intermediate film 301 by irradiating a near infrared ray in a low wavelength region onto the intermediate film 301. Since the first glass plate 201 and the second glass plate 202 are stably bonded with the intermediate film 301, upon forming the laminated glass plate 102, a fold may hardly occur.

A light source for emitting the near infrared ray in a low wavelength region is not particularly limited. However, the light source may be a halogen heater, a halogen lamp, an infrared drying lamp, a light emitting diode for emitting light in the near infrared region, a semiconductor laser, a Nd-YAG laser, a dye laser, or a Ti-doped sapphire laser, for example.

In the embodiment, a low wavelength region of the near infrared is defined to be a wavelength range that is greater than or equal to 700 nm and less than or equal to 1500 nm, for example.

Note that, it suffices if the light source emits light in the low wavelength region of the near infrared. The light source may emit light with a wavelength that is not included in the low wavelength region of the near infrared.

A cooling device 805 rapidly cools the portion welded by the welding head 804. The cooling device 805 may be configured such that room temperature gas or cooled gas is blown, or the cooling device 805 may be configured such that the welded portion is rapidly cooled by a room temperature solid or a cooled solid contacting the surface of the glass. The cooling device 805 may be disposed at the side of the first glass plate 201. Since the first glass plate 201 and the second glass plate 202 are stably bonded with the intermediate film 301, upon forming the laminated glass plate 102, a fold may hardly occur.

Additionally, a moving unit may be provided that is for moving the first suction pad 801, the second suction pad 802, the pressing unit 803, the welding head 804, and the cooling device 805 in the horizontal direction. With such a configuration, a desired position can be welded, depending on the shape of the glass plate.

As a specific example of the method of manufacturing the laminated glass plate 102 for a vehicle according to the embodiment, the first glass plate 201 is shaped in the first curved shape. After that, the first glass plate 201 is placed on the first suction pad 801, and the intermediate film 301, which is cut to have a desired shape, is aligned and placed on the first glass plate 201. Then, the second glass plate 202 having the second shape (which includes a flat plate shape, which is not molded) is aligned and placed on the intermediate film 301.

Subsequently, the first glass plate 201, the intermediate film 301, and the second glass plate 202 are pressed by the first suction pad 801 and the second suction pad 802, so that the surfaces of the first glass plate 201, the intermediate film 301, and the second glass plate 202 are adhered to each other. While further pressing, by the pressing unit 803, the first glass plate 201, the intermediate film 301, and the second glass plate 202 in the vicinity of the portion, onto which the near infrared ray is to be irradiated from the welding head 804, welding is made by emitting the near infrared ray from the welding head 804. Since the first glass plate 201 and the second glass plate 202 are stably bonded with the intermediate film 301, upon forming the laminated glass plate 102, a fold may hardly occur.

The specific configuration of the first glass plate 201, the intermediate film 301, and the second glass plate 202 are described below.

For using the laminated glass plate 102 for a vehicle according to the embodiment as laminated glass of a windshield of the vehicle, optical properties of the first glass plate 201, the second glass plate 202, and the intermediate film 301 according to the embodiment may preferably be as follows, for example.

Namely, the energy transmittance (Te₂) of the second glass plate 202 is greater than or equal to 80%; the visible light transmittance (Tv₃) as the whole laminated glass 102 is greater than or equal to 70%; the energy transmittance (Te₁) of the first glass plate 201 is greater than or equal to 30% and less than or equal to 70%. The energy transmittance (Te₁) of the first glass plate 201 may more preferably be greater than or equal to 40% and less than or equal to 60%.

With such a composition of the glass plates, while ensuring, as the whole laminated glass plate 102 for a vehicle, the visible light transmittance that is required for a windshield, the first glass plate 201 mainly absorbs the near infrared ray, and the intermediate film 301 can be heated by heat transfer.

Further, the energy transmittance (Te₂) of the second glass plate 202 is greater than or equal to 80%; the visible light transmittance (Tv₃) as the whole laminated glass 102 is greater than or equal to 70%; the intermediate transfer film 301 includes an infrared absorbing agent; and the energy transmittance (Te₁) of the first glass plate 201 is greater than or equal to 50% and less than or equal to 90%. The energy transmittance (Te₁) of the first glass plate 201 may more preferably be greater than or equal to 60% and less than or equal to 80%.

With such a composition of the glass plates, while ensuring, as the whole laminated glass plate 102 for a vehicle, the visible light transmittance that is required for a windshield, the intermediate film 301 mainly absorbs the near infrared ray, and the intermediate film 301 can be heated.

Furthermore, for using the laminated glass plate 102 for a vehicle according to the embodiment as low transmittance laminated glass for a side door of a vehicle, so as to protect privacy inside the vehicle, the optical properties of the first glass plate 201, the second glass plate 202, and the intermediate film 301 according to the embodiment may preferably be as follows, for example.

Namely, the energy transmittance (Te₂) of the second glass plate 202 is greater than or equal to 80%; the visible light transmittance (Tv₃) as the whole laminated glass 102 is less than or equal to 70%, more preferably be greater than or equal to 10% and less than or equal to 45%; and the energy transmittance (Te₁) of the first glass plate 201 is greater than or equal to 15% and less than or equal to 45%.

With such a composition of the glass plates, while reducing, as the whole laminated glass plate 102 for a vehicle, the visible light transmittance, the first glass plate 201 mainly absorbs the near infrared ray, and the intermediate film 301 can be heated by heat transfer.

Further, the energy transmittance (Te₂) of the second glass plate 202 is greater than or equal to 80%; the visible light transmittance (Tv₃) as the whole laminated glass 102 is less than 10%; the intermediate transfer film 301 includes an infrared absorbing agent; and the energy transmittance (Te₁) of the first glass plate 201 is greater than or equal to 15%.

With such a composition of the glass plates, while reducing, as the whole laminated glass plate 102 for a vehicle, the visible light transmittance, the intermediate film 301 mainly absorbs the near infrared ray, and the intermediate film 301 can be heated.

Note that, in all of the above-described four examples, the intermediate film 301 can have a composition such that the intermediate film 301 absorbs the near infrared ray and the intermediate film 301 is heated; and the first glass plate 201 can be configured such that the first glass plate 201 absorbs the near infrared ray from the welding head 804, and the intermediate film 301 is heated by heat transfer. By welding the intermediate film 301 in this manner, time for bonding the first glass plate 201, the intermediate film 301, and the second glass plate 202 can be shortened.

Additionally, at least one of the first glass plate 201 and the second glass plate 202 may include an infrared reflection film.

By providing, in the second glass plate 202, the infrared reflection film that reflects a near infrared ray having a wavelength (e.g., greater than or equal to 1200 nm) that is greater than a wavelength in a lower region of the lower wavelength region of the near infrared ray, the second glass plate 202 passes a near infrared ray in the lower wavelength region, which is required for heating the intermediate film 301, while the second glass plate 202 reflects a near infrared ray other than the near infrared ray in the lower wavelength region. Thus, if the laminated glass plate 102 is installed a vehicle, the laminated glass plate 102 can suppress temperature rise in the vehicle. The composition of the film is not particularly limited. However, a film including ITO, and/or SnO₂ may be considered, for example.

Further, by providing, in the first glass plate 201, an infrared reflection film that reflects a near infrared ray having a wavelength that is less than a wavelength (e.g., 700 nm) included in the lowest region of the lower wavelength region of the near infrared ray, the intermediate film 301 can be more efficiently heated, and at the same time, if the laminated glass plate 102 is installed in a vehicle, the laminated glass plate 102 can suppress temperature rise in the vehicle. The composition of the film is not particularly limited. However, a film including Ag may be considered, for example.

After that, the welded portions are rapidly cooled by the cooling device 805, and thereby a temporarily adhered laminated glass plate is obtained, in which several points in the plane of the laminated glass for a vehicle are welded.

Here, during welding, the temperature of the intermediate film 301 may preferably be greater than or equal to 90 °C and less than or equal to 150 °C; and a duration of irradiating the near infrared ray may be less than or equal to 10 seconds, preferably be less than or equal to 7 seconds, and more preferably be less than or equal to 5 seconds. Further, a duration of cooling may be less than or equal to 20 seconds, preferably be less than or equal to 15 seconds, and more preferably be less than or equal to 10 seconds. Since the first glass plate 201 and the second glass plate 202 are stably bonded with the intermediate film 301, upon forming the laminated glass plate 102, a fold may hardly occur.

Further, by controlling conditions, such as the speed of cooling, a rate of change in the speed of cooling, and the temperature prior to cooling, the glass plate and the intermediate film 301 are more stably adhered at the temporarily adhered positions and in the vicinity of the temporarily adhered positions, and a fold can be prevented from occurring.

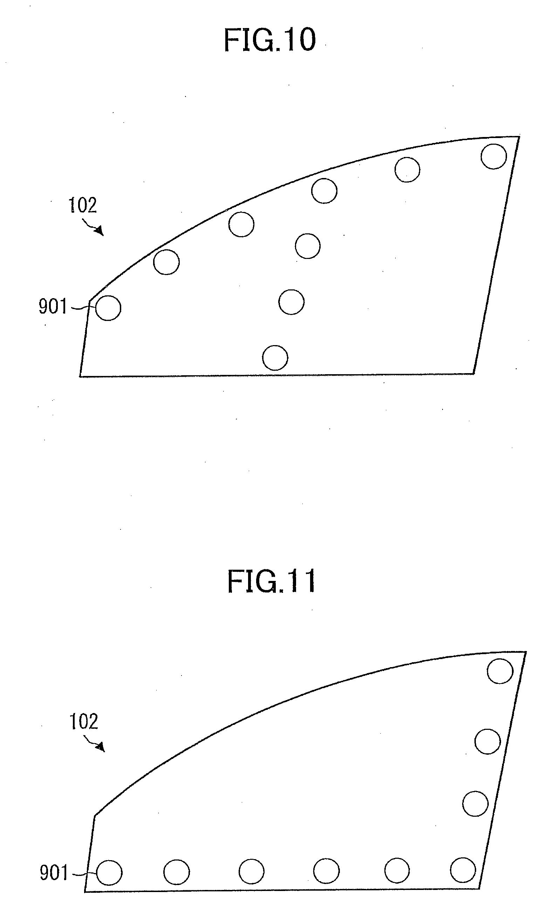

Furthermore, the arrangement of the temporarily adhered positions 901 of the laminated glass plate 102 may preferably be in accordance with the patterns, which are illustrated in FIG. 9, FIG. 10, and FIG. 11. FIG. 9 is a diagram illustrating an example where the welded portions 901 are formed along the peripheral edge 312 of the laminated glass plate 102, while the welded portions 901 are evenly spaced apart by a predetermined distance. FIG. 10 is a diagram illustrating an example where the welded portions 901 are formed, while the welded portions 901 are evenly spaced apart by a predetermined distance, along one edge of the peripheral edge 312 of the laminated glass plate 102, and from a center of the one edge toward inside the surface, so as to form a T-shape as a whole. FIG. 11 is a diagram illustrating an example where the welded portions 901 are formed, while the welded portions 901 are evenly spaced apart by a predetermined distance, along two edges, in an L-shape, of the peripheral edge 312 of the laminated glass plate 102.

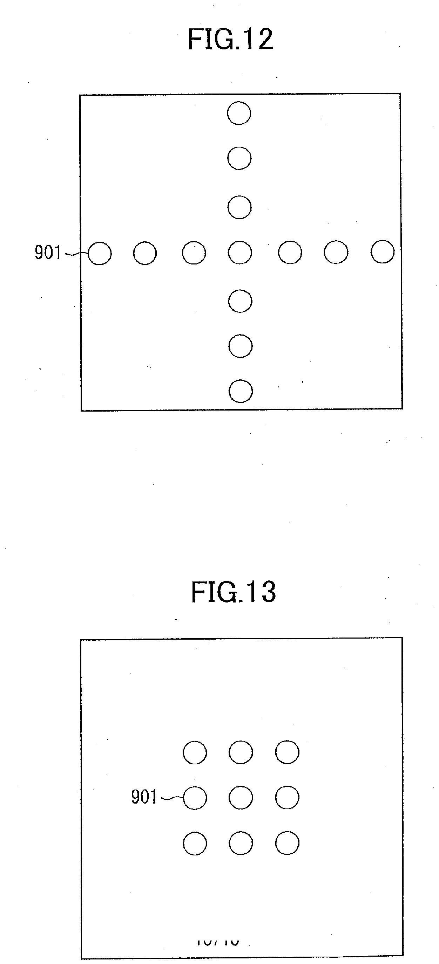

Furthermore, the welded portions may be formed in accordance with the patterns, which are illustrated in FIG. 12 and FIG. 13. FIG. 12 is a diagram illustrating an example where the welded portions 901 are formed, while the welded portions 901 are evenly spaced apart by a predetermined distance, from the center of a glass plate, so as to form a cross shape as a whole. FIG. 13 is a diagram illustrating an example where the welded portions 901 are formed, so that the welded portions 901 are concentrated in a middle portion of the glass plate.

By bonding and temporarily adhering the first glass plate 201, the intermediate film 301, and the second glass plate 202 with such a pattern, upon the laminated glass plate 102 is formed, a fold can be prevented from occurring.

The reason is not clear, however it can be considered as follows. Namely, it can be assumed that, for the pattern of FIG. 9, by constraining the peripheral edge 312 of the laminated glass plate 102, a fold tends not to occur in the peripheral edge 312, and the bending compressive stress are dispersed inside the surface. In addition, it can be assumed that, for the patterns from FIG. 10 to FIG. 13, the second glass plate 202 is deformed along the first glass plate 201, and that deaeration from the peripheral edge 312 is not prevented during the subsequent preliminary crimping and main crimping.

Next, the temporarily adhered laminated glass 102 for a vehicle, which is obtained as described above, is placed inside a bag; and the pressure is reduced by discharging the gas inside the bag by a vacuum pump. In this manner, the bag and the temporarily adhered laminated glass 102 for a vehicle are firmly adhered. By discharging the gas, in this state, the inner portion of the bag is crushed by the atmospheric pressure, so that the first glass plate 201, the intermediate film 301, and the second glass plate 202 are firmly adhered in a state where pressure is applied. In this state, the laminated glass plate 102 is heated by a heater, and the temporarily adhered laminated glass plate 102 is pre-crimped.

Further, as another method of pre-crimping, pre-crimping may be performed by passing a pair of pressure rollers, while heating the laminated glass plate 102. In the pair of the pressure rollers, the distance between rollers is set to be smaller than the thickness of the temporarily adhered laminated glass 102 for a vehicle. Thus, upon the pressure rollers passing through the temporarily adhered laminated glass 102 for a vehicle, the first glass plate 201 and the second glass plate 202 are pressed. Consequently, the air exists inside the temporarily adhered laminated glass 102 for a vehicle is pushed out, and the pre-crimped glass is obtained.

Subsequently, the pre-crimped laminated glass 102 for a vehicle is crimped by an autoclave, and thereby the laminated glass 102 for a vehicle is obtained.

### [Example]

Hereinafter, the present invention is described by an example. However, the present invention is not limited to the example.

The first glass plate 201, the intermediate film 301, and the second glass plate 202 were prepared, each of which had a size of 300 mm × 300 mm. Then, the first glass plate 201, the intermediate film 301, and the second glass plate 202 were laminated, and they were temporarily adhered in a cross shape, as illustrated in FIG. 12, or they were temporarily adhered, so that the welded portions were concentrated in a middle portion of the laminated glass, as illustrated in FIG. 13.

Here, the thickness of the first glass plate 201 was 2.8 mm; the thickness of the intermediate film 301 was 0.76 mm; and the thickness of the second glass plate was 0.5 mm.

As the near-infrared heater included in the welding head 804, a halogen heater that can emit a near-infrared ray having a wavelength in a range from 800 nm to 1200 nm was used, and the duration of irradiation was 5 seconds.

After irradiating the near-infrared ray, the laminated glass plate was cooled by the cooling device 805 for approximately 10 seconds. As the cooling device, a jet cooler was used, and a cooling gas was blown to the portion where the near-infrared ray was irradiated. In this manner, evaluation samples were obtained.

Example 1 represents the sample obtained by using the pattern of FIG. 12, and Example 2 represents the sample obtained by using the pattern of FIG. 13.

The plate thickness of each evaluation sample, which was obtained in this manner, at the corner edge was measured. Here, the plate thickness was measured along the peripheral edge 312 at portions that were separated from the edge by 5 mm toward inside the surface. Specifically, the plate thickness was measured at an end portion, at 5 points in the X-direction from the end portion at each 5 mm interval, and at 5 points in the Y-direction from the end portion at each 5 mm interval. In this manner, values of the plate thickness at 11 points in total were obtained. The "standard deviation" and "maximum value - minimum value" were calculated based on the values for the 11 points.

Further, the radius of curvature of the fold 602 was calculated by setting the value obtained by dividing "maximum - minimum" by 2 as a comber, and by setting the total length of the fold 602 as an arc. Furthermore, from Young's modulus of the glass 71500 MPa and the plate thickness of the second glass plate 0.5 mm, the tensile stress generated at the tensile stress portion 601 of the second glass 202 was calculated.

From the value of the tensile stress, an evaluation was made as to whether, upon application of the pressure in the plate thickness direction of the laminated glass, the laminated glass would be broken. As for the pressure, the pressure was assumed to an extent which could be generated if the laminated glass was used as a vehicle window, and the window was leaned on by a passenger. Furthermore, in accordance with the standard of perspective visual inspection during shipment of a product, optical distortion in the vicinity of the corner edge was evaluated. Here, "o" indicates excellent; "Δ" indicates acceptable; "×" indicates a failure.

Additionally, the first glass plate 201, the intermediate film 301, and the second glass plate 202 were prepared, where the size of the side glass plate for a vehicle was the actual size. Then, the first glass plate 201, the intermediate film 301, and the second glass plate 202 were laminated, and they were temporarily adhered, as illustrated in FIG. 9 to FIG. 11. Here, the condition of the temporary adhesion, and conditions for the measurement were the same as those of Examples 1 and 2. Example 3 represents the sample obtained by using the pattern of FIG. 9, Example 4 represents the sample obtained by using the pattern of FIG. 10, and Example 5 represents the sample obtained by using the pattern of FIG. 11.

Further, as comparative examples 1, 2, and 3, samples obtained by simply laminating and bonding, without the temporary adhesion, were exemplified.

**[Table 1]**

| | Standard deviation (mm) | Maximum value - Minimum value (mm) | Tensile stress (MPa) | Strength | Optical distortion |
|---|---|---|---|---|---|
| Example 1 | 0.011 | 0.033 | 3.569 | ○ | ○ |
| Example 2 | 0.015 | 0.053 | 5.859 | ○ | ○ |
| Example 3 | 0.020 | 0.046 | 5.264 | ○ | ○ |
| Example 4 | 0.030 | 0.072 | 8.237 | ○ | ○ |
| Example 5 | 0.035 | 0.095 | 10.873 | ○ | Δ |
| Comparative example 1 | 0.038 | 0.100 | 11.400 | × | × |
| Comparative example 2 | 0.058 | 0.152 | 17.390 | × | × |
| Comparative example 3 | 0.088 | 0.228 | 26.081 | × | × |

From Table 1, if the standard deviation of the thickness of the glass plate at the corner edge is greater than 0.038 mm, as comparative examples 1 and 2, the value of the maximum value - the minimum value tends to be large. Especially, since the tensile stress exceeds 1 MPa, cracks tend to be generated at the corner edge.

Whereas, in the Examples according to the embodiment, the standard deviation of the thickness of the glass plate at the corner edge is small, and the value of the maximum value - the minimum value tends to be small. Since the tensile stress can be suppressed to be less than or equal to 11 MPa, cracks at the corner edge can be reduced.

Furthermore, if the standard deviation of the thickness of the glass plate at the corner edge is less than or equal to 0.03 mm, the tensile stress to be generated is suppressed to be less than or equal to 10 MPa. Thus, a glass plate can be obtained such that the corner edge is hardly broken, and the optical distortion in the vicinity of the corner edge can be improved. Consequently, a high-quality glass plate can be obtained.

Table 2 summarizes the relationship between the angle with which the two edges intersect at the end portion, and the standard deviation in Example 3.

**[Table 2]**

| Angle (degrees) | Standard deviation (mm) | Maximum value - Minimum value (mm) |
|---|---|---|
| 75 | 0.020 | 0.046 |
| 86 | 0.001 | 0.029 |
| 105 | 0.006 | 0.018 |
| 120 | 0.002 | 0.007 |
| 127 | 0.004 | 0.015 |
| 135 | 0.005 | 0.015 |

From Table 2, it can be seen that, if the angle with which the two edges intersect at the end portion is less than 90 degrees, the standard deviation of the glass plate at the corner edge tends to be large. Thus, if the standard deviation of the plate thickness is adjusted to be less than 0.038 mm at the corner edge where the angle with which the two edges intersect at the end portion is less than 90 degrees, more preferable be less than or equal to 80 degrees, significant effect can be obtained where cracks at the corner edge can be reduced.

The present invention is not limited to the specifically disclosed embodiments, and numerous variations and modifications may be made without departing from the scope of the present invention.

The laminated plate according to the embodiment may preferably be used for laminated glass, which slides up and down, for a side door of a vehicle; a fixed window; a laminated plate that is obtained by laminating resin plates, such as polycarbonate plates; a laminated plate formed by a combination of a pillar of a body of a vehicle and a style strip that is laminated to cover the pillar; and cover glass for an electronic device.

## Claims

1. A laminated glass plate (102) comprising:
a first plate (201) being curved in a first curved shape;
a second plate (202) having a second shape, the second shape being different from the first curved shape; and
an intermediate film (301) bonding the first plate (201) and the second plate (202);
said laminated glass plate (102) being **characterized in that** a first corner edge (401) of the laminated second plate (202) does not include a fold, the fold being a deformation that occurs locally in a plate thickness direction,
wherein a plate thickness of the first plate (201) is greater than or equal to 1.5 mm and less than or equal to 4.0 mm,
wherein a plate thickness of the second plate (202) is greater than or equal to 0.2 mm and less than or equal to 1.0 mm; and
wherein a standard deviation of a thickness of the laminated glass plate (102) at the first corner edge (401) is less than 0.038 mm, wherein the thickness is measured along the corner edge at each 5 mm interval at a position that is separated from the peripheral edge of the laminated glass plate (102) by 5 mm toward inside the surface, thereby obtaining 11 measured points.

2. The laminated glass plate (102) according to claim 1,
wherein an angle of the first corner edge (401) is less than or equal to 90 degrees.

3. The laminated glass plate (102) according to any one of claim 1 or 2,
wherein, in a central area (314) of the laminated glass plate (102), the standard deviation of a thickness is less than or equal to 0.03 mm.

4. The laminated glass plate (102) according to any one of claims 1 to 3,
wherein the first curved shape is a multi-curved shape that is curved in a first direction and in a second direction, the second direction being perpendicular to the first direction.

5. The laminated glass plate (102) according to claim 4,
wherein the second shape is another multi-curved shape that is curved in the first direction and in the second direction.

6. The laminated glass plate 8102) according to claim 5,
wherein the first plate (201) includes a first main surface (211) and a second main surface (212), the first main surface (211) being a surface of the first plate (201) opposite to the intermediate film (301), and the second main surface (212) contacting the intermediate film (301),
wherein the second plate (202) includes a third main surface (213) and a fourth main surface (214), the third main surface (213) contacting the intermediate film (301), and the fourth main surface (214) being a surface of the second plate (202) opposite to the intermediate film (301), and
wherein, when bonding between the first plate (201) and the second plate (202) by the intermediate film (301) is released, and when a radius of curvature of the first main surface (21) in the first direction is a middle value, a radius of curvature of the third main surface (213) in the first direction is out of a first range from a first lower value that is 1.1 times as small as the middle value and a first upper value that is 1.1 times as large as the middle value, and the radius of curvature of the third main surface (213) in the first direction is in a second range from a second lower value that is 5 times as small as the middle value and a second upper value that is 5 times as large as the middle value.

7. The laminated glass plate (102) according to any one of claims 1 to 6,
wherein a bending compressive stress is generated at least at a part of an outer periphery of the fourth main surface (214).

8. The laminated glass plate (102) according to any one of claims 1 to 7,
wherein a peripheral edge (312) of the laminated glass plate (102) includes a wave-like deformed portion.

9. The laminated glass plate (102) according to any one of claims 1 to 8,
wherein, in the wave-like deformed portion, the standard deviation of the plate thickness is less than or equal to 0.02 mm.

10. The laminated glass plate (102) according to any one of claims 1 to 9,
wherein a ratio between the thickness of the first plate (201) and the thickness of the second plate (202) is greater than or equal to 0.1 and less than or equal to 0.5.

11. The laminated glass plate (102) according to any one of claims 1 to 10,
wherein energy transmittance, Te₂, of the second plate (202) is greater than or equal to 80%, visible light transmittance, Tv₃, of the laminated glass plate is greater than or equal to 70%, and energy transmittance, Te₁, of the first plate (201) is greater than or equal to 30% and less than or equal to 70%.

12. The laminated glass plate (102) according to any one of claims 1 to 10,
wherein energy transmittance, Te2, of the second plate (202) is greater than or equal to 80%, visible light transmittance, Tv3, of the laminated glass plate is less than or equal to 70%, and energy transmittance, Te1, of the first plate (201) is greater than or equal to 15% and less than or equal to 45%.

## Patentansprüche

1. Eine laminierte Glasplatte (102), die Folgendes umfasst:
eine erste Platte (201), die in einer ersten gekrümmten Form gebogen ist;
eine zweite Platte (202) mit einer zweiten Form, wobei sich die zweite Form von der ersten gekrümmten Form unterscheidet; und
einen Zwischenfilm (301), der die erste Platte (201) und die zweite Platte (202) verbindet;
wobei die genannte laminierte Glasplatte (102) **dadurch gekennzeichnet ist, dass** eine erste Eckkante (401) der laminierten zweiten Platte (202) keinen Falz bzw. keine Falte (*fold*) beinhaltet, wobei der Falz eine Verformung ist, die lokal in Richtung einer Plattendicke auftritt,
wobei eine Plattendicke der ersten Platte (201) größer als oder gleich 1,5 mm und kleiner als oder gleich 4,0 mm ist,
wobei eine Plattendicke der zweiten Platte (202) größer als oder gleich 0,2 mm und kleiner als oder gleich 1,0 mm ist; und
wobei eine Standardabweichung einer Dicke der laminierten Glasplatte (102) an der ersten Eckkante (401) weniger als 0,038 mm beträgt, wobei die Dicke entlang der Eckkante in jedem 5 mm-Intervall an einer Position gemessen wird, die von der Umfangskante der laminierten Glasplatte (102) um 5 mm in Richtung der Innenseite der Oberfläche beabstandet ist, wodurch 11 gemessene Punkte erhalten werden.

2. Die laminierte Glasplatte (102) nach Anspruch 1,
wobei ein Winkel der ersten Eckkante (401) kleiner oder gleich 90 Grad ist.

3. Die laminierte Glasplatte (102) nach irgendeinem der Ansprüche 1 oder 2,
wobei in einem zentralen Bereich (314) der laminierten Glasplatte (102) die Standardabweichung einer Dicke kleiner oder gleich 0,03 mm ist.

4. Die laminierte Glasplatte (102) nach irgendeinem der Ansprüche von 1 bis 3,
wobei die erste gekrümmte Form eine mehrfach gekrümmte Form ist, die in einer ersten Richtung und in einer zweiten Richtung gekrümmt ist, wobei die zweite Richtung zur ersten Richtung senkrecht verläuft.

5. Die laminierte Glasplatte (102) nach Anspruch 4,
wobei die zweite Form eine weitere mehrfach gekrümmte Form ist, die in der ersten Richtung und in der zweiten Richtung gekrümmt ist.

6. Die laminierte Glasplatte 8102) nach Anspruch 5,
wobei die erste Platte (201) eine erste Hauptoberfläche (211) und eine zweite Hauptoberfläche (212) beinhaltet, wobei die erste Hauptoberfläche (211) eine Oberfläche der ersten Platte (201) ist, die dem Zwischenfilm (301) gegenüberliegt, und die zweite Hauptoberfläche (212) den Zwischenfilm (301) berührt,
wobei die zweite Platte (202) eine dritte Hauptoberfläche (213) und eine vierte Hauptoberfläche (214) beinhaltet, wobei die dritte Hauptoberfläche (213) den Zwischenfilm (301) berührt, und die vierte Hauptoberfläche (214) eine Oberfläche der zweiten Platte (202) ist, die dem Zwischenfilm (301) gegenüberliegt, und
wobei, wenn die Bindung zwischen der ersten Platte (201) und der zweiten Platte (202) durch den Zwischenfilm (301) gelöst wird, und wenn ein Krümmungsradius der ersten Hauptoberfläche (21) in der ersten Richtung einen mittleren Wert aufweist, ein Krümmungsradius der dritten Hauptoberfläche (213) in der ersten Richtung außerhalb eines ersten Bereichs liegt von einem ersten niedrigeren Wert, der 1,1 mal so klein ist wie der mittlere Wert und einem ersten oberen Wert, der 1,1 mal so groß wie der mittlere Wert ist, und der Krümmungsradius der dritten Hauptfläche (213) in der ersten Richtung in einem zweiten Bereich liegt von einem zweiten niedrigeren Wert, der 5 mal so klein wie der mittlere Wert ist, und einem zweiten oberen Wert, der 5 mal so groß wie der mittlere Wert ist.

7. Die laminierte Glasplatte (102) nach irgendeinem der Ansprüche von 1 bis 6,
wobei eine Biegedruckspannung erzeugt wird zumindest an einem Teil eines Außenumfangs der vierten Hauptfläche (214).

8. Die laminierte Glasplatte (102) nach irgendeinem der Ansprüche von 1 bis 7,
wobei eine Umfangskante (312) der laminierten Glasplatte (102) einen wellenartig verformten Abschnitt beinhaltet.

9. Die laminierte Glasplatte (102) nach irgendeinem der Ansprüche von 1 bis 8,
wobei im wellenförmig verformten Abschnitt die Standardabweichung der Plattendicke kleiner oder gleich 0,02 mm ist.

10. Die laminierte Glasplatte (102) nach irgendeinem der Ansprüche von 1 bis 9,
wobei ein Verhältnis zwischen der Dicke der ersten Platte (201) und der Dicke der zweiten Platte (202) größer als oder gleich 0,1 und kleiner als oder gleich 0,5 ist.

11. Die laminierte Glasplatte (102) nach irgendeinem der Ansprüche von 1 bis 10,
wobei die Energiedurchlässigkeit Te₂ der zweiten Platte (202) größer oder gleich 80% ist, die Durchlässigkeit für sichtbares Licht Tv₃ der laminierten Glasplatte größer oder gleich 70% ist, und die Energiedurchlässigkeit Te₁ der ersten Platte (201) größer oder gleich 30% und kleiner oder gleich 70% ist.

12. Die laminierte Glasplatte (102) nach irgendeinem der Ansprüche von 1 bis 10,
wobei die Energiedurchlässigkeit Te₂ der zweiten Platte (202) größer oder gleich 80% ist, die Durchlässigkeit für sichtbares Licht Tv₃ der laminierten Glasplatte kleiner oder gleich 70% ist und die Energiedurchlässigkeit Te₁ der ersten Platte (201) größer oder gleich 15% und kleiner oder gleich 45% ist.

## Revendications

1. Une plaque de verre stratifié (102) comprenant :
une première plaque (201) étant incurvée suivant une première forme incurvée ;
une deuxième plaque (202) ayant une deuxième forme, la deuxième forme étant différente de la première forme incurvée ; et
une pellicule ou encore un film intermédiaire (301) reliant la première plaque (201) et la deuxième plaque (202) ;
ladite plaque de verre stratifié (102) étant **caractérisée en ce qu'**un premier bord de coin (401) de la deuxième plaque stratifiée (202) n'inclut pas de pli, le pli étant une déformation qui se produit localement dans la direction de l'épaisseur de la plaque,
sachant que l'épaisseur de la première plaque (201) est supérieure ou égale à 1,5 mm et inférieure ou égale à 4,0 mm,
sachant que l'épaisseur de la deuxième plaque (202) est supérieure ou égale à 0,2 mm et inférieure ou égale à 1,0 mm ; et
sachant qu'un écart-type d'une épaisseur de la plaque de verre stratifié (102) au premier bord de coin (401) est inférieur à 0,038 mm, sachant que l'épaisseur est mesurée le long du bord de coin à chaque intervalle de 5 mm à une position qui est séparée du bord périphérique de la plaque de verre stratifié (102) de 5 mm vers l'intérieur de la surface, obtenant ainsi 11 points mesurés.

2. La plaque de verre stratifié (102) d'après la revendication 1,
sachant qu'un angle du premier bord de coin (401) est inférieur ou égal à 90 degrés.

3. La plaque de verre stratifié (102) d'après l'une quelconque des revendications 1 ou 2,
sachant que, dans une zone centrale (314) de la plaque de verre stratifié (102), l'écart-type d'une épaisseur est inférieur ou égal à 0,03 mm.

4. La plaque de verre stratifié (102) d'après l'une quelconque des revendications 1 à 3,
sachant que la première forme incurvée est une forme à courbures multiples qui est incurvée dans une première direction et dans une deuxième direction, la deuxième direction étant perpendiculaire à la première direction.

5. La plaque de verre stratifié (102) d'après la revendication 4,
sachant que la deuxième forme est une autre forme à courbures multiples qui est courbée dans la première direction et dans la deuxième direction.

6. La plaque de verre stratifié 8102) d'après la revendication 5,
sachant que la première plaque (201) inclut une première surface principale (211) et une deuxième surface principale (212), la première surface principale (211) étant une surface de la première plaque (201) opposée au film intermédiaire (301), et la deuxième surface principale (212) étant en contact avec le film intermédiaire (301),
sachant que la deuxième plaque (202) inclut une troisième surface principale (213) et une quatrième surface principale (214), la troisième surface principale (213) étant en contact avec le film intermédiaire (301), et la quatrième surface principale (214) étant une surface de la deuxième plaque (202) opposée au film intermédiaire (301), et
sachant que, lorsque la liaison entre la première plaque (201) et la deuxième plaque (202) par le film intermédiaire (301) est libérée (*released*)*,* et lorsqu'un rayon de courbure de la première surface principale (21) dans la première direction est une valeur moyenne, un rayon de courbure de la troisième surface principale (213) dans la première direction est hors d'une première plage d'une première valeur inférieure qui est 1,1 fois plus petite que la valeur moyenne et une première valeur supérieure qui est 1,1 fois plus grande que la valeur moyenne, et que le rayon de courbure de la troisième surface principale (213) dans la première direction se trouve dans une deuxième plage d'une deuxième valeur inférieure qui est 5 fois plus petite que la valeur moyenne et une deuxième valeur supérieure qui est 5 fois plus grande que la valeur moyenne.

7. La plaque de verre stratifié (102) d'après l'une quelconque des revendications de 1 à 6,
sachant qu'une contrainte de compression en flexion est générée au moins sur une partie d'une périphérie extérieure de la quatrième surface principale (214).

8. La plaque de verre stratifié (102) d'après l'une quelconque des revendications de 1 à 7,
sachant que le bord périphérique (312) de la plaque de verre stratifié (102) inclut une portion déformée en forme de vague.

9. La plaque de verre stratifié (102) d'après l'une quelconque des revendications de 1 à 8,
sachant que, dans la portion déformée en forme de vague, l'écart-type de l'épaisseur de la plaque est inférieur ou égal à 0,02 mm.

10. La plaque de verre stratifié (102) d'après l'une quelconque des revendications de 1 à 9,
sachant qu'un rapport entre l'épaisseur de la première plaque (201) et l'épaisseur de la deuxième plaque (202) est supérieur ou égal à 0,1 et inférieur ou égal à 0,5.

11. La plaque de verre stratifié (102) d'après l'une quelconque des revendications de 1 à 10,
sachant qu'une transmittance d'énergie Te₂ de la deuxième plaque (202) est supérieure ou égale à 80%, qu'une transmittance de lumière visible Tv₃ de la plaque de verre stratifié est supérieure ou égale à 70%, et qu'une transmittance d'énergie Te₁ de la première plaque (201) est supérieure ou égale à 30% et inférieure ou égale à 70%.

12. La plaque de verre stratifié (102) d'après l'une quelconque des revendications de 1 à 10,
sachant qu'une transmittance d'énergie Te₂ de la deuxième plaque (202) est supérieure ou égale à 80 %, qu'une transmittance de lumière visible Tv₃ de la plaque de verre stratifié est inférieure ou égale à 70 %, et qu'une transmittance d'énergie Te₁ de la première plaque (201) est supérieure ou égale à 15 % et inférieure ou égale à 45 %.
